# DEMANDE DE BREVET EUROPEEN

(11) **EP 1 367 032 A1**
(43) Date de publication de la demande: **03.12.2003**
(21) Numéro de dépôt: 03358006.9
(22) Date de dépôt: 14.05.2003
(51) Int. Cl.: C04B 11/28

(54) **Liant hydraulique résultant du mélange d'un liant sulfatique et d'un liant à caractère pouzzolanique**

(30) Priorité: 27.05.2002 FR 0206415
(71) Demandeur: Couturier, Jean, 06400 Cannes (FR)
(72) Inventeur: Couturier, Jean, 06400 Cannes (FR)
(74) Mandataire: Domange, Maxime

(57) **Abrégé**

Liant hydraulique caractérisé en ce qu'il est constitué essentiellement par un mélange homogène de :
a) un premier liant hydraulique à caractère pouzzolanique, et
b) un second liant sulfatique à base d'anhydrite III soluble de sulfate de calcium, de formule CaSO₄εH₂O avec ε compris entre 0 et 0,5, de préférence de 0,06 à 0,11, obtenu par traitement thermique de gypse.

## Description

La présente invention concerne un nouveau liant hydraulique résultant du mélange d'un liant à caractère pouzzolanique, cendres volantes de centrales thermiques ou pouzzolanes et d'un liant sulfatique de type plâtre ou plâtre amélioré obtenu par traitement thermique du gypse, y compris le Gypcement®.

Le plâtre traditionnel s'obtient par déshydratation partielle du gypse (CaSO₄,2H₂O) en hémihydrate ou bassanite (CaSO₄,½H₂ O).

Une déshydratation plus poussée du gypse conduit à la transformation de l'hémihydrate en des anhydrites artificielles, à savoir l'anhydrite III ou α encore dénommée anhydrite soluble, puis l'anhydrite II ou β encore dénommée anhydrite surcuite ou insoluble. L'anhydrite III ou α peut être représentée par la formule (CaSO₄, εH₂O) avec ε compris entre 0 et 0,5, notamment de 0,06 à 0,11. L'anhydrite III ou α est une phase métastable extrêmement hygroscopique et possède donc une cinétique de réhydratation très grande. Il se réhydrate spontanément en hémihydrate en fonction de l'hygrométrie de l'air. On n'obtient donc jamais 100% d'anhydrite III ou α, celui-ci étant toujours en association avec de la bassanite (hémihydrate).

Les plâtres β sont obtenus par cuisson de gypse à une température inférieure à 200°C à la pression atmosphérique. Ils sont constitués d'hémihydrates β-CaSO₄0,5H₂O qui, dans les plâtres courants, peuvent être accompagnés d'anhydrite soluble CaSO₄, εH₂O et d'anhydrite surcuite CaSO₄ en très faibles proportions.

On sait préparer des plâtres améliorés (désignés parfois par "plâtres α"). Ces hémihydrates α sont obtenus par cuisson à des pressions supérieures à la pression atmosphérique. Ils présentent des caractéristiques mécaniques plus élevées que celles des plâtres courants. Les phénomènes qui se déroulent au cours des traitements sont mal connus et l'on attribue généralement l'amélioration des performances mécaniques à la présence de la variété cristallographique α dans les produits obtenus, sans que l'on connaisse exactement la proportion de cette variété dans ces produits ni les conditions qui permettent de l'obtenir de façon stable et reproductible.

De façon traditionnelle, ces plâtres hémihydrates α sont fabriqués à partir de gypse en soumettant celui-ci à une phase de cuisson d'une température inférieure à 200°C par voie humide en autoclave sous une pression de l'ordre de 5 à 10 bars pendant une durée de l'ordre de 10 heures, puis à une phase de séchage à chaud par un courant d'air chaud et sec.

Pour tenter de pallier les défauts de ce procédé traditionnel de fabrication de plâtre amélioré (mise en oeuvre extrêmement coûteuse, reproductibilité incertaine), on a proposé d'autres procédés.

On connaît des procédés de traitement thermique permettant d'obtenir de l'anhydrite III ou α stabilisé afin de limiter sa réhydratation spontanée qui comprend essentiellement deux étapes suivantes :
a) Tout d'abord, une étape de séchage et de déshydratation du gypse par augmentation de température pour former l'anhydrite III ou α. Cette déshydratation doit permettre de sécher l'humidité superficielle du gypse et éliminer les deux molécules d'eau de cristallisation.
b) Puis, une trempe thermique permettant de stabiliser cette phase métastable.

L'anhydrite III stabilisée permet d'obtenir des matériaux ayant des propriétés très intéressantes telles qu'une résistance mécanique, notamment résistance précoce, élevée, propriétés d'isolation thermique et acoustique pouvant être supérieures à celles du plâtre et du ciment. Par ailleurs, l'anhydrite III peut être obtenue à des coûts plus faibles que les coûts d'obtention du plâtre et du ciment.

La teneur en anhydrite III ou α stabilisée est fonction du procédé de traitement thermique : la température, le temps de cuisson et la granulométrie du gypse de départ sont déterminants.

Il est connu dans WO 96 33957, un procédé de traitement thermique de matière pulvérulente à base de sulfate de calcium dihydraté dans lequel on réalise une étape de cuisson qui porte la température du gypse traité à une température comprise entre 220 et 360°C, selon les caractéristiques du gypse traité et une opération de trempe thermique mise en oeuvre de façon à amener la matière chauffée par la cuisson à une température inférieure à 100°C en un temps compris entre 6 et 12 minutes, ce refroidissement étant réalisé au moyen d'air froid et sec injecté sous pression au coeur de la matière. Le procédé permet d'obtenir une transformation du dihydrate dans une proportion d'anhydrite III ou α stabilisée jusqu'à 70%.

Dans FR 2 767 816, on a décrit un procédé permettant de transformer plus de 70% de l'hydrate de sulfate de calcium en anhydrite III ou α stable, dans lequel on réalise une trempe thermique plus rapide en abaissant la température à moins de 80°C, de préférence entre 40 et 50°C, en moins de deux minutes afin de stabiliser l'anhydrite III ou α en plus grande proportion. Ce procédé permet, en effet, d'obtenir un produit contenant plus de 70%, voire plus de 90% d'anhydrite III ou α stabilisé par rapport au poids total des composés provenant de la transformation de l'hydrate de sulfate de calcium contenu dans le produit de départ.

Dans la demande FR 00/01335, la demanderesse a décrit un procédé qui permet de fournir de l'anhydrite III ou α stabilisé produit industriellement et présentant un taux de pureté d'au moins 85% mais pouvant atteindre 90%, voire 95% et plus, par rapport au poids total des composés provenant de la transformation de l'hydrate de sulfate de calcium dans le produit de départ.

Ce procédé de production industrielle d'anhydrite III ou α stabilisée par traitement thermique d'une matière pulvérulente à base d'hydrate de sulfate de calcium (CaSO₄, 2H₂O), de préférence du gypse naturel ou de synthèse, comprend les étapes successives dans lesquelles :
a) on chauffe ladite matière pulvérulente à une température comprise entre 220 °C et 360°C de manière à transformer l'hydrate de sulfate de calcium en anhydrite soluble III ou α, et
b) on fait subir à ladite matière ainsi transformée, une trempe thermique de manière à abaisser sa température d'au moins 150°C pour atteindre une température au moins inférieure à 110°C, de préférence inférieure à 80°C, de préférence encore en moins de deux minutes, de façon à stabiliser l'anhydrite III ou α.

Durant l'étape de cuisson a), le dihydrate de sulfate de calcium perd 26,2% d'eau de cristallisation moins εH₂O ainsi que l'eau de surface. Selon ledit procédé, on évacue l'humidité ambiante en contact avec la matière transformée en anhydrite III ou α de l'étape a), notamment l'humidité dégagée par ladite matière chauffée de l'étape a), cette évacuation se faisant avant et pendant l'étape b) de refroidissement. Plus particulièrement, selon ledit procédé, on évacue l'humidité en aspirant l'atmosphère humide ambiante en contact avec ladite matière transformée. Dans un mode de réalisation avantageux, on effectue les étapes a) et b) dans des réacteurs différents et on évacue l'atmosphère humide de l'étape a) par des moyens d'aspiration situés en amont du réacteur de l'étape b). Avantageusement, on envoie un flux de gaz sec sur ladite matière transformée de l'étape a), à contre-sens par rapport au déplacement de ladite matière entre l'étape a) et l'étape b), de préférence de l'air sec. Ainsi la matière déshydratée à l'étape a) ne risque pas de se réhydrater avant de réaliser l'étape b). Avantageusement encore, on envoie un flux de gaz froid et sec sur ladite matière transformée à contre-sens par rapport au déplacement de ladite matière pendant l'étape b). De préférence, ledit flux de gaz sec à contre-sens est évacué avec l'atmosphère humide de l'étape a). Ainsi, on évite que l'air chaud humide dégagé à l'étape a) ne soit refloué en amont du réacteur de l'étape a) et ne vienne en contact avec ladite matière avant que celle-ci n'atteigne la température requise, ce qui aurait pour effet d'augmenter le taux d'humidité de ladite matière et de dégrader le rendement de l'étape a).

L'air sec est injecté à une pression étudiée telle que le déplacement du gypse vers la sortie du réacteur ne soit pas gêné par l'air.

Dans un mode préférentiel de réalisation du procédé, avant l'étape a), on réduit l'humidité superficielle du gypse à une teneur pondérale inférieure à 10%, de préférence inférieure à 5%. De préférence, on évacue ladite humidité de sorte que le taux d'humidité dans l'atmosphère ambiante soit inférieur à 1% en poids.

De préférence encore, ladite matière pulvérulente de départ comprend au moins 95% en poids, de préférence au moins 98% en poids de dihydrate de sulfate de calcium(CaSO₄, 2H₂O).

Des liants à base d'anhydrite III ou α solubles, fabriqués selon les procédés spécifiques, décrits ci-dessus, par traitement de gypse naturel ou de gypse de synthèse associé à différents processus industriels (sulfogypses, phosphogypses, gypses de désulfuration, etc...) antérieurement commercialisés sous la marque Gypcement®, sont maintenant dénommés par la demanderesse sous la marque Anhydrate®.

Les liants hydrauliques à base d'hémihydrates et/ou anhydrites obtenus par traitement thermique de déshydratation du dihydrate de sulfate de calcium et notamment, du gypse qu'il soit naturel ou de synthèse, sont dénommés, dans la présente demande, "liants sulfatiques à base de sulfate de calcium obtenus par traitement thermique du gypse".

Ces liants hydrauliques du type sulfatique présentent comme principal inconvénient, une prise très rapide, problème plus ou moins résolu par l'utilisation d'adjuvants retardateurs et plastifiants. En effet, avec l'usage d'agent retardateur de prise ou d'agent fluidifiant, on n'arrive pas à obtenir des temps de prise supérieurs à 4 heures sans dégrader notablement les propriétés de résistance mécanique. Un autre inconvénient de ces liants sulfatiques est leur trop grande sensibilité à l'humidité et leur très faible tenue à l'eau qui limitent leur utilisation en extérieur.

Comparés aux liants sulfatiques, les ciments, notamment les ciments Portland, se caractérisent par un coût plus élevé, par une prise et un durcissement beaucoup plus lents, en général d'au moins 6 heures, une bonne tenue dans l'eau mais une résistance aux agressions chimiques (acides, sels comme sulfates ...) parfois modeste, fonction de leur composition chimique et minéralogique (teneur en C3A, présence ou non d'additions minérales ...). Par ailleurs, ces ciments sont sensibles au retrait et ont une résistance en traction plutôt faible.

En effet, un inconvénient de ces ciments classiques est leur sensibilité aux eaux sulfatées qui a tendance à occasionner des dégradations de leur structure et un autre inconvénient est leur tendance à la fissuration liée à une résistance à la traction Rt relativement faible et à un phénomène de retrait par séchage.

En outre dans le domaine de la construction, il est important d'obtenir une résistance mécanique initiale, notamment une résistance à 7 jours, suffisamment élevée pour supporter les charges et permettre un décoffrage rapide, ce qui oblige, avec du ciment Portland, à mettre en oeuvre des quantités importantes de ciment ou divers adjuvants coûteux.

On a donc recherché, de longue date, à combiner ciments et plâtres pour fournir un nouveau liant hydraulique permettant de cumuler ou, à tout le moins, de moduler les différents caractéristiques et avantages respectifs des ces deux types de liants hydrauliques et, plus particulièrement, un but de la présente invention est de fournir un nouveau liant permettant d'augmenter la résistance mécanique à la compression initiale des liants hydrauliques connus de type ciment ou sulfatique.

Ces essais n'ont jamais pu aboutir essentiellement pour des raisons d'incompatibilité chimique entre ces constituants (Marc Nolhier, "Construire en plâtre", éditions l'Harmattan 1986, pages 160-161). On observait l'apparition d'un excès d'étringite, se traduisant par des gonflements affectant les propriétés mécaniques, notamment avec des problèmes de fissuration et aussi des réactions chimiques qui dégradaient les armatures métalliques du béton.

Dans FR 02 880 724, on a proposé de mélanger des liants sulfatiques, notamment des liants à base d'anhydrite III soluble du type Anhydrate®, avec certaines catégories de ciments, notamment des ciments sulfo-alumineux, pour leur conférer des propriétés avantageuses et, plus particulièrement, pour améliorer leur résistance mécanique et leur tenue à l'eau et, enfin, pour moduler le temps de prise et de durcissement du liant hydraulique en fonction des proportions respectives desdits liants sulfatiques et ciments sulfo-alumineux.

Toutefois, les ciments sulfo-alumineux sont rares et d'un coût très élevé, ce qui rend leur utilisation, dans le cadre d'une exploitation industrielle intensive dans le domaine des Travaux Publics, voire de la Construction, économiquement peu rentable en dépit de leur résistance mécanique élevée.

Les liants hydrauliques à caractère pouzzolanique sont de faible coût. Ils se caractérisent par une prise à l'eau très lente d'une part et, d'autre part, des propriétés mécaniques relativement réduites, quoique suffisantes pour certaines applications, notamment dans les techniques routières ou le terrassement. Ainsi, on a proposé d'additionner des liants pouzzolaniques dans les ciments car la libération de la chaux dans les ciments, lors de leur prise d'eau, permet d'activer le liant pouzzolanique. On peut ainsi obtenir un liant hydraulique moins cher que le ciment mais la présence du liant pouzzolanique affecte les propriétés mécaniques du liant hydraulique obtenu par ce mélange.

Les liants à caractère pouzzolanique se caractérisent par un comportement à l'eau différent des ciments. La prise d'un ciment se définie comme étant une prise exothermique : ce liant hydraulique, en présence d'eau, libère' de la chaux à l'état naissant (hydrolyse) et hydrate ces silicates et aluminates calciques anhydres. La prise d'un liant pouzzolanique est d'un tout autre ordre. Il ne s'agit plus d'un produit anhydre dont la prise peut s'expliquer par un phénomène d'hydratation en présence d'un agent basique activateur qui conduit à une réaction en présence d'eau pour donner un produit hydraté à propriété de liant. Un liant à caractère pouzzolanique se définie donc comme faisant prise en présence d'eau et d'un agent activant.

On a décrit, dans FR 2 530 614, un procédé d'activation de la prise de liant hydraulique à caractère pouzzolanique en y adjoignant un activateur de prise, à savoir des cendres sulfocalciques de centrales thermiques. Toutefois, ces cendres sulfocalciques ont elles-mêmes un fort pouvoir hydraulique du fait de leur teneur élevée en chaux libre et donnent lieu lors de l'hydratation à un gonflement important, dû à la réaction exothermique de la chaux libre (CaO), qui est fort gênant lors de la préparation d'un liant hydraulique. D'autre part, les propriétés de résistance mécanique du liant hydraulique à caractère pouzzolanique activé par lesdites cendres sulfocalciques, restent relativement faibles.

Le but de la présente invention est de fournir une nouvelle gamme de liants hydrauliques de type ciment permettant d'obtenir des propriétés de résistance mécanique élevées et la possibilité de moduler les temps de prise.

Plus particulièrement, le but de l'invention est de fournir un nouveau liant hydraulique de type ciment à base de liant sulfatique en mélange avec une composition minérale, lui conférant des propriétés de résistance mécanique plus élevée avec un retardement de la prise du liant sulfatique et une meilleure tenue à l'eau dudit liant sulfatique.

Un autre but de la présente invention est de fournir une nouvelle gamme de liants hydrauliques permettant de moduler leurs propriétés en terme de résistance mécanique et temps de prise, notamment en fonction des proportions respectives des différents constituants.

Un autre but de la présente invention est de fournir une nouvelle gamme de liants hydrauliques dont l'exploitation industrielle soit économiquement peu coûteuse, notamment dans le cadre d'application dans les Travaux publics, le Génie Civil et la Construction et le Bâtiment en général.

Il a maintenant été découvert qu'on améliore, de façon surprenante, les propriétés de résistance mécanique des liants sulfatiques d'une part et des liants à caractère pouzzolanique d'autre part, en les mélangeant, lorsque le liant sulfatique est à base d'anhydrite III soluble.

Sans être lié par aucune théorie, l'inventeur pense que cet effet synergique, qui concerne les résistances mécaniques intéressantes à court terme et à long terme, obtenues avec le liant hydraulique consistant dans le mélange d'un liant sulfatique à base d'anhydrite III et d'un liant à caractère pouzzolanique, provient d'une modification cristalline dans les deux constituants lorsque ceux-ci sont mélangés.

Le mélange d'un liant à caractère pouzzolanique avec un liant sulfatique à base d'anhydrite III et, notamment, du type Anhydrate®, permet d'accélérer la prise du liant pouzzolanique et de conférer des résistances mécaniques nettement supérieures. De même, ce mélange permet d'obtenir des résistances mécaniques nettement supérieures à celles du liant sulfatique seul, notamment de l'Anhydrate® seul, et de retarder sa prise, ce qui rend sa mise en oeuvre lors de l'utilisation finale, beaucoup plus aisée et, enfin, lui confère des propriétés de résistance mécanique à long terme nettement supérieures.

Enfin et surtout, un liant hydraulique selon l'invention est d'un faible coût et n'entraîne aucune pollution.

Plus généralement, l'association de ces deux types de liants, l'un pouzzolanique à prise relativement lente mais présentant des propriétés de résistance mécanique à long terme de part sa structure cristalline et l'autre sulfatique à prise très rapide, permet l'élaboration d'un nouveau liant dont les caractéristiques mécaniques sont modulables en fonction du choix et du dosage des activants choisis parmi la chaux, la soude et les silicates de soude. Ce sont donc les agents d'activation du mélange, objet du liant hydraulique selon l'invention, qui permettent d'obtenir une gamme de nouveaux liants hydrauliques particulièrement performants par rapport aux liants hydrauliques actuels.

Plus précisément, la présente invention a donc pour objet un liant hydraulique constitué essentiellement par un mélange homogène de :
a) un premier liant hydraulique à caractère pouzzolanique et
b) un second liant sulfatique à base d'anhydrite III soluble, de sulfate de calcium de formule CaSO₄εH₂O avec ε compris entre 0 et 0,5, de préférence de 0,06 à 0,11, obtenu par traitement thermique de gypse.

On entend ici par "liant hydraulique à caractère pouzzolanique" ou "liant pouzzolanique", un liant qui fait prise en présence d'eau uniquement lorsqu'on le fait réagir avec une base alcaline faisant fonction d'activateur de prise. Le "caractère pouzzolanique" est donc l'aptitude à réagir avec un dit agent alcalin en présence d'eau pour donner un produit hydraté à propriété de liant.

Plus particulièrement, ledit premier liant hydraulique à caractère pouzzolanique est choisi principalement parmi les laitiers de hauts fourneaux de sidérurgie granulés, les cendres volantes de combustion de charbon et les pouzzolanes naturelles.

Les liants pouzzolaniques comprennent principalement les composés CaO, SiO₂ et Al₂O₃.

De préférence, le liant hydraulique à caractère pouzzolanique est un laitier de hauts fourneaux broyé, obtenu à partir de laitiers dits "granulés" ou "bouletés".

Les laitiers de hauts fourneaux présentent, plus particulièrement, une composition chimique avec les teneurs pondérales suivantes :
- CaO : 40-45%
- SiO₂ : 30-36%
- Al₂O₃: 11-19%

Les laitiers de hauts fourneaux comprennent également des teneurs plus réduites en MgO et des traces (moins de 1% en poids) de FeO, MnO, S, P₂O₅.

Dans un autre mode de réalisation, le liant pouzzolanique est constitué de cendres volantes silico-alumineuses provenant de la combustion du charbon.

Les cendres silico-alumineuses provenant de la combustion du charbon comprennent principalement de l'alumine (Al₂O₃) et de la silice (SiO₂) et, à un degré moindre, de la chaux (CaO). Dans les cendres silico-alumineuses issues de la combustion des charbons en centrale thermique, la silice et l'alumine se présentent sous forme de minéraux phylliteux (schistes), de composition analogue à celle des argiles et renfermant un peu de quartz. La composition chimique de telles cendres volantes provenant de la combustion de charbon, varie selon les charbons entre les fourchettes suivantes :
SiO₂ : 43 à 54% ; Al₂O₃ : 22 à 32% ; Fe₂O₃ + TiO₂ : 4 à 15% ; CaO : 1 à 5% ; MgO : 1 à 3% ; K2O : 2 à 5% ; Na₂O : 0,5 à 1% ; SO₃ : 0,2 à 2%.

Dans un autre mode de réalisation, le liant pouzzolanique est de la pouzzolane naturelle.

On entend, ici, par "pouzzolane naturelle" des cendres volcaniques ou des tuffs volcaniques comprenant de l'alumine, de la silice et de la chaux et principalement Al₂O₃ et SiO₂.

Selon une autre caractéristique avantageuse de la présente invention, les particules dudit premier liant à caractère pouzzolanique ont une granulométrie inférieure à 100 µm, de préférence inférieure à 80 µm, et une surface spécifique Blaine comprise entre 1000 et 6000 cm²/g, de préférence de 2000 à 5000 cm²/g.

Dans le cas des laitiers granulés de hauts fourneaux, on obtient cette granulométrie et ces valeurs de surface spécifiques Blaine en broyant lesdits granulés à une taille de préférence inférieure à 80 µm, de préférence encore inférieure à 40 µm, pour obtenir une surface Blaine comprise de préférence entre 3000 et 4500 cm²/g. Si la surface Blaine est insuffisante, le liant est moins réactif. En revanche, si la surface Blaine est excessive, le liant absorbe davantage d'eau et doit donc être mis en oeuvre avec davantage d'eau, ce qui peut contribuer à affecter négativement ses propriétés de résistance mécanique.

Dans le cas de cendres volantes de centrales thermiques, la surface spécifique Blaine optimale est de 2000 à 3000 cm²/g avec une granulométrie inférieure à 100 µm. les cendres volantes de centrales thermiques se présentent sous forme de billes, ce qui contribue à conférer au liant hydraulique une bonne maniabilité, c'est pourquoi, de préférence, on évite de les broyer.

Le liant sulfatique selon l'invention comprend comme constituant principal l'anhydrite III de sulfate de calcium obtenu par traitement thermique du gypse, mais il peut comprendre, en outre, les hémihydrates de sulfate de calcium de forme α ou β, de formule C₄SO₄.0,₅H₂O, y compris les plâtres α ou β et de l'anhydrite de forme II, de formule CaSO₄, ou un mélange de ces hémihydrates et anhydrite.

De préférence, ledit liant sulfatique comprend un mélange d'anhydrite III soluble et d'hémihydrate de forme α ou β, de préférence encore de forme β.

Plus particulièrement encore, ledit liant sulfatique est un liant comprenant plus de 50% d'hémihydrate de forme α ou β.

Lorsque le liant sulfatique est de l'Anhydrate®, ledit liant sulfatique est un liant comprenant plus de 50%, de préférence plus de 70% d'anhydrite III soluble.

Selon une autre caractéristique de l'invention, le rapport pondéral dudit premier liant hydraulique à caractère pouzzolanique par rapport audit second liant sulfatique, est de 10/90 à 90/10.

Plus particulièrement dans une première variante de réalisation, ledit rapport pondéral dudit premier liant hydraulique à caractère pouzzolanique audit second liant sulfatique est de 10/90 à 30/70 et, dans une seconde variante de réalisation, ledit rapport pondéral dudit premier liant hydraulique à caractère pouzzolanique audit second liant sulfatique est de 70/30 à 90/10.

Selon une autre caractéristique importante de la présente invention, le liant hydraulique comprend, en outre, un ou plusieurs agents basiques alcalins, activateurs de prise, choisis de préférence parmi la chaux éteinte ou la chaux grasse, la soude et les silicates alcalins, de préférence encore, les méta-silicates de soude ou de lithium.

En général, lesdits agents activateurs de prise sont ajoutés dans le mélange au moment de l'utilisation, notamment lorsque le liant hydraulique selon l'invention est mis en oeuvre par mélange avec des granulats ou agrégats pour la préparation de béton ou de mortier, mais ils peuvent être ajoutés au mélange dès avant sa mise en oeuvre finale, notamment avec des agrégats.

Le choix et le pourcentage du ou des activants basiques dépend des pourcentages respectifs dans le mélange desdits premier et second liants. Le rôle de ces activants est d'augmenter le pH du mélange lors de la mise en oeuvre finale du liant hydraulique selon l'invention, pour obtenir de préférence un pH entre 8 et 13, notamment de 12,5, afin, semble-t-il, d'obtenir une solubilisation des composants desdits premier et second liants, notamment de la chaux, de la silice et surtout de l'alumine par élévation du pH, mais aussi solubilisation des cristaux constitutifs dudit second liant sulfatique.

L'addition desdits agents activateurs de prise d'eau basiques permet de passer d'un état métastable correspondant à une phase vitreuse, lors de l'ajout d'eau, qui se transforme ensuite en un état stable cristallisé correspondant à une phase cristalline hydratée, état stable cristallisé plus performant mécaniquement de par la complémentarité desdits premier et second liants constitutifs du liant hydraulique selon l'invention.

Ainsi, l'hydroxyde d'aluminium Al(OH)₄ précipite en milieu ammoniacal à pH de 11,5 mais se re-dissout vers 12,5, pH qui peut être atteint en présence d'agent basique tel que la soude ou la chaux éteinte ou grasse.

Plus particulièrement, le liant hydraulique comprend de 4 à 20% en poids d'agents basiques alcalins activateurs de prise.

Dans un mode préféré de réalisation, ledit premier liant hydraulique à caractère pouzzolanique est un laitier granulé de hauts fourneaux finement broyé et ledit second liant sulfatique est un liant comprenant au moins 70% d'anhydrite III soluble, et de préférence encore, ledit liant hydraulique comprend deux activateurs de prise basiques de façon à obtenir un pH entre 8 et 13, notamment de 12,5, lesdits activateurs consistant dans :
a) de la chaux éteinte ou vive, dans une teneur pondérale de préférence de 4 à 20%,
b) de la soude ou silicate alcalin, de préférence méta-silicate de soude ou de lithium, dans une teneur pondérale de préférence de 2 à 8%.

Le choix et le dosage desdits agents basiques activants dépendent aussi des pourcentages desdits premier liant pouzzolanique et second liant sulfatique. Une base forte, comme la soude (NaOH) ou un silicate alcalin, est préférée pour favoriser la prise desdits premiers liants hydrauliques à caractère pouzzolanique, notamment des laitiers de hauts fourneaux. En effet, ces laitiers en milieu basique donnent lieu à la formation de produits à durcissement rapide tels que l'aluminate tétracalcique, dans le cas de la chaux, et un mélange de ce dernier et de gelhenite lorsque l'activant est une base forte du type soude, de sorte que les résistances mécaniques des compositions telles que mortier ou autre, obtenues par l'activation par la soude ou un silicate alcalin, sont plus élevées que par l'activation à la chaux seule.

De même, on donne de la préférence à la chaux pour les liants sulfatiques.

L'invention a également pour objet un matériau obtenu par humidification d'un liant hydraulique selon l'invention, de préférence en mélange avec des agrégats ou granulats pour la préparation de béton ou mortier et, de préférence encore, comprenant une proportion pondérale desdits agrégats ou granulats par rapport audit liant hydraulique selon l'invention de 10/90 à 35/65.

Les liants hydrauliques selon l'invention se prêtent à de nombreuses utilisations telles que, notamment après incorporation d'agrégats, la fabrication de matériaux de construction comme des parpaings, des briques, des tuiles ; la construction de routes par incorporation au gravier et cailloux ; la stabilisation et la consolidation de sols.

D'autres caractéristiques et avantages de la présente invention apparaîtront à la lumière de la description détaillée qui va suivre :

### Matériel et méthode :

1) Le liant Anhydrate® utilisé dans les exemples 1 à 2 a été obtenu à partir de sulfogypse comprenant 3,5% d'impuretés et une granulométrie inférieure à 100 µm.
   La température du produit en sortie de cuiseur était de 240°C, la durée de cuisson de 40 minutes. La température du produit en sortie de refroidissement était de 20°C et la durée de refroidissement de 2 minutes.
   Le produit obtenu comprenait de l'anhydrite III ou α stabilisé dans une proportion de 80% de pureté et comprenait 5% d'impuretés et 15% d'hémihydrate ou d'un autre composé.
2) Le laitier de hauts fourneaux était un laitier de fonte de la sidérurgie de la société SOLMER à Fos sur Mer (13), de composition chimique suivante :
   - CaO : 41 à 45%
   - MgO : 4 à 6%
   - SiO₂ : 32 à 35%
   - Al₂O₃ :15 à 17%
   - FeO : 0.5 à 1%
   - MnO : 0.5 à 1%
   - S : 0.5 à 1%
   - P₂O₅ : 0,1 à 0,5%

   Il s'agissait d'un laitier qui a été finement moulu par broyage d'une granulométrie inférieure à 50 µm et dont la surface spécifique Blaine était de 3500 cm²/g.
3) Dans les exemples 1 et 2 ci-après, on a préparé deux types de mortiers comportant 75% de sable normalisé 0/3 selon la norme EN-196.1.
   On a préparé un mortier à l'aide d'un liant composé d'un mélange de laitier et de liant sulfatique dans les conditions suivantes :
   - malaxage à sec avec le sable pendant 30 secondes,
   - introduction de l'agent d'activation (chaux et silicate de sodium),
   - introduction de l'eau dans un rapport eau/liant de 0,35 (exemple 1) et 0,3 (exemple 2) pendant 30 secondes en maintenant le malaxage à petite vitesse pendant 90 secondes.
4) Dans les exemples 1 et 2, Rc représente la résistance mécanique à la compression en MPa (méga Pascal) mesurée selon la norme EN-196.1 (Méthode d'essai des ciments - Partie 1 : "Détermination des résistances mécaniques").

Les résistances à la compression sont calculées sur des éprouvettes 4x4x16 cm conformément à la norme EN-196.1.

### Exemple 1 :

On a réalisé une formulation de mortier avec les compositions pondérales suivantes :
- sable 0,3 normalisé : 75%
- liant hydraulique N°1 : 25%

Le liant hydraulique N°1 était composé de 75% de laitier de hauts fourneaux broyé et 25% de liant sulfatique à base d'anhydrite III soluble, à savoir le liant Anhydrate®
- agent basique d'activation :
   - chaux éteinte (Ca(OH)₂) : 5%
   - silicate de sodium : 6%

Les teneurs pondérales en agents d'activation sont données par rapport au poids total de la composition, à savoir : agents d'activation + liants + sable.

La composition ainsi obtenue permet d'obtenir un pH voisin de 12 permettant une dissolution complète des hydrates.

On a réalisé des formulations comparatives de mortier à base de laitier seul comme liant ou à base d'Anhydrate® seul comme liant.

Le mortier avec laitier seul était activé avec 3% de soude et le mortier avec l'Anhydrate® seul comme liant, était activé avec 5% de chaux éteinte.

Les mortiers à base de laitiers seulement comme liant ou à base d'Anhydrate® seulement comme liant, ont été réalisés également avec un rapport eau/liant de 0,25 pour le laitier et 0,4 pour l'Anhydrate®.

**Tableau 1 :**

| résistances mécaniques | | | |
|---|---|---|---|
| Rc (MPa) | 7 jours | 28 jours | 90 jours |
| Mortier avec liant N°1 | 36 | 45 | 58 |
| Mortier avec laitier seul | 22 | 34 | 42 |
| Mortier avec Anhydrate® seul | 24 | 39 | 50 |

### Exemple 2 :

On a réalisé une formulation de mortier avec les compositions pondérales suivantes :
- sable 0,3 normalisé : 75%
- liant hydraulique N°2 : 25%

Le liant hydraulique N°2 était composé de 25% du laitier de hauts fourneaux et 75% de liant sulfatique à base d'anhydrite III soluble, à savoir le liant Anhydrate®
- agent basique d'activation :
- chaux éteinte (Ca(OH)₂) : 10%
- silicate de sodium : 4%

La composition ainsi obtenue permet d'obtenir un pH voisin de 12 permettant une dissolution complète des hydrates.

Les teneurs pondérales en agents d'activation sont données par rapport au poids total de la composition, à savoir : agents d'activation + liants + sable.

**Tableau 2 :**

| résistances mécaniques | | | |
|---|---|---|---|
| Rc (MPa) | 7 jours | 28 jours | 90 jours |
| Mortier avec liant N°2 | 39 | 48 | 62 |
| Mortier avec laitier seul | 22 | 34 | 42 |
| Mortier avec Anhydrate® seul | 24 | 39 | 50 |

### Analyse des résultats des tableaux 1 et 2 :

On observe une très nette augmentation des résistances mécaniques des mortiers selon l'invention, reflétant un effet de synergie par rapport à des mortiers obtenus avec les constituants de départ que sont un liant composé exclusivement de laitiers et d'agents activateurs ou un liant composé d'Anhydrate® et agents activateurs. L'agent activateur est nécessaire pour obtenir les résistances optimums de ces différents liants.

Il fait, plus particulièrement observer que les valeurs de Rc obtenus à 7 jours, permettent d'obtenir une résistance mécanique initiale, notamment une résistance à 7 jours, suffisamment élevée pour supporter les charges et permettre un décoffrage rapide comme c'est nécessaire dans la Construction et le Bâtiment.

D'une façon générale, les liants composés obtenus conduisent aux principales caractéristiques suivantes :
- prise et durcissement modulable entre quelques minutes et quelques heures,
- résistance mécanique initiale élevée,
- amélioration des résistances mécaniques des laitiers et liants sulfatiques aussi bien dans l'air que dans l'eau.

Avec la formule n°1, le temps de prise était de 1 heure environ et, avec la formule n°2, le temps de prise était de 45 minutes.

Ce nouveau liant est fabriqué à partir de deux matières qui peuvent être des sous-produits de l'Industrie, à savoir :
- le laitier provenant de la fonte, et
- les gypses industriels provenant de dépollution et dont les quantités produites sont très importantes, ces gypses industriels servant de réactif de départ pour la fabrication de l'Anhydrate®.

Ce nouveau liant est économique et écologique (pas de cheminée et pas de pollution). Ce nouveau liant selon l'invention améliore la rapidité de prise des liants sulfatiques comme l'Anhydrate® et accélère la prise des liants laitiers réputée lente.

## Revendications

1. Liant hydraulique **caractérisé en ce qu'**il est constitué essentiellement par un mélange homogène de :
a) un premier liant hydraulique à caractère pouzzolanique, et
b) un second liant sulfatique à base d'anhydrite III soluble de sulfate de calcium, de formule CaSO₄εH₂O avec ε compris entre 0 et 0,5, de préférence de 0,06 à 0,11, obtenu par traitement thermique de gypse.

2. Liant hydraulique selon la revendication 1, **caractérisé en ce que** ledit premier liant hydraulique à caractère pouzzolanique est choisi parmi les laitiers de hauts fourneaux de sidérurgie granulés, les cendres volantes de combustion de charbon et les pouzzolanes naturelles.

3. Liant hydraulique selon la revendication 2, **caractérisé en ce que** le liant hydraulique à caractère pouzzolanique est un laitier granulé de hauts fourneaux.

4. Liant hydraulique selon la revendication 2, **caractérisé en ce que** ledit premier liant hydraulique à caractère pouzzolanique est constitué par des cendres volantes silico-alumineuses provenant de la combustion du charbon.

5. Liant hydraulique selon l'une des revendications 1 à 4, **caractérisé en ce que** les particules dudit premier liant hydraulique à caractère pouzzolanique ont une granulométrie inférieure à 100 µm, de préférence inférieure à 80 µm et une surface spécifique Blaine comprise entre 1000 et 6000 cm²/g, de préférence de 2000 à 5000 cm²/g.

6. Liant hydraulique selon l'une des revendications 1 à 5, **caractérisé en ce que** ledit liant sulfatique comprend en outre au moins un composé choisi parmi les hémihydrates de sulfate de calcium de forme α ou β, de formule générale Ca₄SO₄0,5H₂O et de l'anhydrite de forme II de formule CaSO₄ , et un mélange de ces hémihydrates et anhydrite.

7. Liant hydraulique selon la revendication 6, **caractérisé en ce que** ledit liant sulfatique comprend un mélange d'anhydrite III soluble et d'hémihydrate de forme α ou β.

8. Liant hydraulique selon l'une des revendications 6 à 7, **caractérisé en ce que** ledit liant sulfatique est un liant comprenant plus de 50% d'hémihydrate de forme α ou β.

9. Liant selon la revendication 8, **caractérisé en ce que** le rapport pondéral dudit hémihydrate audit anhydrite III de sulfate de calcium est inférieur à 30/70, de préférence inférieur à 15/85, de préférence encore inférieur à 10/90.

10. Liant selon l'une des revendications 1 à 9, **caractérisé en ce que** le rapport pondéral dudit premier liant hydraulique à caractère pouzzolanique par rapport audit second liant sulfatique, est de 10/90 à 90/10.

11. Liant selon la revendication 10, **caractérisé en ce que** ledit rapport pondéral dudit premier liant hydraulique à caractère pouzzolanique audit second liant sulfatique est de 10/90 à 30/70.

12. Liant selon la revendication 10, **caractérisé en ce que** ledit rapport pondéral dudit premier liant hydraulique à caractère pouzzolanique audit second liant sulfatique est de 70/30 à 90/10.

13. Liant hydraulique selon l'une des revendications 1 à 12, **caractérisé en ce qu'**il comprend en outre un ou plusieurs agents basiques alcalins activateurs de prise de façon à obtenir un pH compris entre 8 et 13, choisis de préférence parmi la chaux éteinte, la soude et les silicates alcalins, de préférence encore les méta-silicates de soude ou de lithium.

14. Liant hydraulique selon la revendication 13, **caractérisé en ce qu'**il comprend au moins un agent basique alcalin activateur de prise choisi parmi la chaux éteinte, la soude et les silicates alcalins, de préférence encore les méta-silicates de soude ou de lithium.

15. Liant hydraulique selon l'une des revendications 1 à 14, **caractérisé en ce que** ledit premier liant hydraulique à caractère pouzzolanique est un laitier granulé de hauts fourneaux finement broyé et ledit second liant sulfatique est un liant comprenant au moins 70% d'anhydrite III soluble.

16. Liant hydraulique selon la revendication 15, **caractérisé en ce qu'**il comprend deux activateurs de prise basiques de façon à obtenir un pH de 12, lesdits activateurs consistant dans :
a) de la chaux éteinte ou vive dans une teneur pondérale, de préférence de 4 à 20%,
b) de la soude ou silicate alcalin, de préférence méta-silicate de soude ou de lithium dans une teneur pondérale, de préférence de 2 à 8%.

17. Matériau obtenu par humidification d'un liant hydraulique selon l'une des revendications 1 à 16.

18. Matériau selon la revendication 17 obtenu par humidification d'un liant hydraulique selon l'une des revendications 1 à 16, en mélange avec des agrégats ou granulats pour la préparation de béton ou mortier.

19. Matériau selon la revendication 18, **caractérisé en ce qu'**il comprend une proportion pondérale desdits agrégats ou granulats par rapport audit liant hydraulique selon l'une des revendications 1 à 16, de 10/90 à 35/65.
